# EUROPEAN PATENT APPLICATION

(11) **EP 2 439 693 A1**
(43) Date of publication of application: **11.04.2012**
(21) Application number: 10306083.6
(22) Date of filing: 05.10.2010
(51) Int. Cl.: G06Q 30/00

(54) **Method of encouraging a behavior of a participant**

(71) Applicant: Alcatel Lucent, 75007 Paris (FR)
(72) Inventor: Schaich, Frank, 70469 Stuttgart (DE); Tangemann, Michael, 71229 Leonberg (DE)
(74) Representative: Meyer zu Bexten, Elmar

(57) **Abstract**

Method of encouraging a behavior of a participant, which method comprises reporting a progress towards a predetermined goal and storing the progress in a database.

## Description

### Field of the Invention

The invention relates to a method of encouraging a behavior of a participant.

### Background

This section introduces aspects that may be helpful in facilitating a better understanding of the invention. Accordingly, the statements of this section are to be read in this light and are not to be understood as admissions about what is in the prior art or what is not in the prior art.

In business and administration, an incentive program is a formal scheme used to promote or encourage specific actions or behavior by a specific group of people during a defined period of time. Incentive programs are particularly used in business management to motivate employees, and in sales to attract and retain customers. The scientific literature also refers to this concept as Pay for Performance.

Among the major downsides of conventional incentive programs is their lack of support for instant communication and detailed reporting as well as the administrative expenses caused by their associated start-up and maintenance cost. A further disadvantage lies in their inability to incorporate feedback from measurement, tracking, and analysis into the program design along the way, that is, before the program has ended. Lastly, state-of-the-art incentive programs are hardly capable of sorting and reporting data by specific program elements, such as by business unit, product line, geographic region, or individual participant.

### Summary

The present invention was made in view of the prior art described above, and the object of some embodiments is to provide a practical method capable of conducting an incentive program.

According to an embodiment there is provided a method of encouraging a behavior of a participant, which method comprises reporting a progress towards a predetermined goal and storing the progress in a database.

### Description of the Embodiments

Hereinafter, the best mode for carrying out a method according to an embodiment is described in detail.

In this embodiment, major steps of the method are performed by a computer program, also known as a software program or simply program, that is, a sequence of instructions written to perform the method by means of a computer. To allow the program to communicate with database server software, in a preliminary step, the program builds a database connection. Here, by database server is meant any computer program that provides database services to other computer programs or computers, as defined by the client-server model of computing. According to this model, the program requesting the database server's resources would commonly be called a database client.

In this context, by database is meant any organized collection of data for one or more uses, typically in digital form. To allow the database client to store and retrieve data in a structured way, the database server is part of a database management system (DBMS), that is, a set of computer programs that controls the creation, maintenance, and use of the database. In order to prevent unauthorized users from viewing or updating the database, the DBMS supports data security, that is, means of ensuring that data is kept safe from corruption and that access to it is suitably controlled. To cater for the needs of the database client, the DBMS is configured to store personal information on the participants of the incentive program as well as their individual progress towards a predetermined goal set. For instance, in a points-based incentive program, progress of a participant may be represented by the number of points collected by that individual, whereas the goal may take the form of reaching predetermined levels at which the participant would be allowed to redeem his or her points for awards.

To provide an interactive web site to participants of the incentive program, the database client employs a web server technology known as server-side scripting. According to this approach, the database client fulfills a participant's requests by running a script on a web server, that is, a further computer program that delivers, or serves, content, using the Hypertext Transfer Protocol (HTTP) over the World Wide Web (WWW). According to this architecture, the web site interfaces to the database by means of the database client. In this scenario, the web server and the database server may run on the same or on different physical or virtual machines. A primary advantage to the use of server-side scripting in this embodiment is the achievable customization of the content delivered based on the participant's requirements, access rights, or queries into the database. A further benefit lies in the resulting ability of the database client to script the behavior of the web server in separate files, the actual web server software remaining unchanged. In the art of web development, the content delivered by the web server based on such scripts would commonly be labeled dynamic, as opposed to static, content.

To access the dynamic content thus delivered, the participant makes use of a web browser, that is, a software application for retrieving, presenting, and traversing information resources on the WWW. Typically, the web browser is run on a personal computer (PC), that is, any general-purpose computer whose size, capabilities, and original sales price make it useful for individuals, and which is intended to be operated directly by the participant with no intervening computer operator. More specifically, to allow for mobile participation, the PC may take the form of a laptop, sometimes called notebook, that is, a PC that is small and light enough for the participant to rest on his or her lap, typically integrating components such as a display, a keyboard, a pointing device, and speakers into a single unit.

In an alternative embodiment, for further improved mobility, the web browser runs on a mobile phone, also called mobile, cellular phone, cell phone, or handphone, that is, an electronic device used for full-duplex two-way radio telecommunications over a cellular network of base stations known as cell sites. Particularly, the mobile phone may take the form of a smartphone, that is, a mobile phone that offers more advanced computing ability and connectivity than a contemporary basic device. In the field of mobile software, the web browser of this alternative embodiment is commonly known as a mobile browser, also called a microbrowser, minibrowser or wireless internet browser (WIB), optimized so as to display the dynamic content most effectively on a small screen and sufficiently compact and efficient to accommodate the low memory capacity and bandwidth of the wireless handheld device. In this scenario, the web site may take the form of a wireless portal, that is, a web site that supports participants with a smartphone or alphanumeric pager.

The Internet being a global system of interconnected and potentially insecure computer networks, the web browser is configured to establish a secure channel in order to protect the participant from eavesdroppers and man-in-the-middle attacks. To this end, the web server and web browser both are adapted to support Hypertext Transfer Protocol Secure (HTTPS), a combination of the Hypertext Transfer Protocol (HTTP) with either of the Transport Layer Security (TSL) or Secure Session Layer (SSL) protocols to provide encrypted communication and secure identification of the web server to the web browser. In an alternative embodiment, to the same end, the web server and web browser may employ the Secure Hypertext Transfer Protocol (S-HTTP), a less used method of encrypting WWW communications carried over HTTP as defined in Request for Comments (RFC) 2660.

Since the embodiment at hand allows for access to the incentive program on demand by its participants, by means of the Internet, the resulting infrastructure is sometimes labeled a cloud computing infrastructure. In this context, the term "cloud" is used as a metaphor for the Internet.

To allow for interaction between the participant and the web site, the database client comprises a web-based user interface, also known as a web user interface (WUI), that is, a user interface adapted to accept input and provide output by generating web pages which are transmitted via the Internet and viewed by the participant using the web browser. Here, a web page or webpage is any document or resource of information that is suitable for the WWW and can be accessed through the web browser.

In a preliminary step, to commence participation in the incentive program, the participant employs the web browser to register with the web site. To this end, the participant enters a Uniform Resource Identifier (URI), that is, a string of characters used to identify the web site on the Internet, which entry causes the web browser to establish a TSL/SSL session with the web server as defined by the HTTPS specifications. Once the session is established, the WUI generates a registration web page which is transmitted by the web server via the Internet to the participant's PC or mobile phone for presentation by the web browser. This web page allows the participant to enter his or her particulars for transmission back to the web server, where the WUI accepts the input and causes the database client to update a registry of participants maintained by the DBMS.

Being registered with the web site, the participant may use the web browser to report his or her progress towards the goal or goals defined by the incentive program. For this purpose, the participant may need to authenticate, that is, to confirm his or her identity to the web server, allowing the latter to limit access to authorized participants. In a basic embodiment, to implement authentication, the web server may make use of a public key certificate as defined by HTTPS. Here, by public key certificate, also known as a digital certificate or identity certificate, is meant an electronic document which uses a digital signature to bind the participant's identity to a public key. In this case, the web server would create one such certificate for each participant, causing the former to be loaded into the participant's web browser. Typically, the certificate would contain the name and address of the authorized participant and be automatically checked by the web server on each reconnect to verify the participant's identity, potentially without even requiring a password.

In a more advanced embodiment, authentication may require the participant to read a barcode. In the context of encodings, by barcode is meant an optical machine-readable representation of data. To this end, the participant may make use of an optical scanner, commonly called a barcode reader, attached to his or her PC, or employ special software installed on the PC or mobile phone to scan the barcode from an image acquired by a camera attached to or integrated with the respective device. A mobile phone thus equipped is also known as a camera phone, while a camera connected to a PC is commonly called a webcam. In this context, the term "webcam" is meant to include a video capture device built directly into a laptop or desktop screen.

For increased data representation capability and symbol strength, the barcode may take the form of a data matrix code. By data matrix code, sometimes labeled just data matrix or two-dimensional (2-D) matrix code, is meant any two-dimensional matrix barcode consisting of black and white "cells" or modules arranged in either a square or rectangular pattern.

For improved user experience, the barcode employed to authenticate the participant to the web server may also comprise the URI used to identify the web site itself. This enhancement relieves the participant from manually entering the URI, effectively eliminating one step of the reporting procedure.

In a further embodiment designed to meet even stronger security requirements, authentication encompasses capturing a biometric characteristic of the participant. In this context, by biometric is meant any characteristic allowing recognition of the participant based upon one or more intrinsic physical or behavioral traits. In the former case, the characteristic is labeled physiological; in the latter, it is commonly called a behavioral biometric or behaviometric. Within the class of physiological biometrics, the fingerprint has emerged as a reliable characteristic for use in identification and authentication. Herein, the term "fingerprint" is used in its wider meaning, including the traces of an impression from the friction ridges of any part of the participant's hand. To this end, the participant's PC is equipped with an electronic fingerprint reader, also known as a fingerprint sensor, or, in the case of a laptop, integrated with such apparatus. As a particular benefit of the latter embodiment, the built-in reader may double as a motion detector for document scrolling, similar in function to what is known in the field of user interface techniques as a scroll wheel or mouse wheel.

As an alternative or in addition to fingerprint detection, authentication may be based on an ocular-based technology such as a retinal scan or iris recognition. Here, by retinal scan is meant any biometric technique that uses the unique patterns on the participant's retina for identification. Similarly, iris recognition is any method of biometric authentication that uses pattern-recognition techniques based on high-resolution images of the irides of the participant's eyes.

Upon successful authentication of the participant, the WUI generates a further web page which is transmitted by the web server via the Internet to the participant's PC or mobile phone for presentation by the web browser. This web page allows the participant to enter the details on his or progress for transmission back to the web server, where the WUI accepts the input and causes the web server to store it in the database as scripted by the database client.

For improved usability, when accepting the participant's input, the WUI may require the web browser to wait for a predetermined event before initiating transmission and storage of the progress reported. In computing, by event is meant an action that is initiated outside the scope of the web browser but is handled by a piece of code inside the web browser. Preferably, assuming the PC is equipped with a pointing device such as a mouse, the expected event may take the form of a mouse click by the participant.

As an alternative to manual entry of the progress, any barcode used for authentication of a participant to the web server may be adapted to further represent the progress achieved by that participant, thus effectively integrating authentication and entry into a single processing step. To prevent the participant from reporting spurious progress to redeem an unjustified award, the web server, upon receipt of the barcode, validates the latter prior to updating the database. In computer science, by data validation is meant the process of ensuring that the web server operates on clean, correct and useful data. Preferably, an embodiment thus enhanced would comprise the additional step of, upon storing the progress in the database, generating a new barcode to be used for the next progress report by the respective participant.

In an improved embodiment, for added protection against unwarranted claims by the participant, the web server may be scripted to obtain confirmation that the progress reported by that participant is legitimate and a corresponding update to the database is indeed justified. To this end, the web server would contact a predetermined approver, such as by creating a window on specific apparatus accessible by the approver. Such apparatus may include a PC, such as a laptop, or a mobile phone, such as a smartphone. In computing, by window is meant a visual area, usually rectangular in shape, containing some kind of user interface.

As an alternative to notifying the approver by means of a window, the web server may be scripted to request approval by means of electronic mail, commonly called email or e-mail. In Internet terminology, e-mail is a method of exchanging digital messages across the Internet or other computer networks. As a particular advantage of such embodiment over the use of a window, the approver no longer needs to be online simultaneously but needs only connect briefly, typically to an e-mail server, for as long as it takes to receive the message from the web server. Upon notification, to ensure that the approver concurs with the envisaged database update, he or she may be required to click a button of a pointing device, thus triggering a mouse click event.

In addition to the basic functions of registration and progress reporting, the web server and database client are configured to support additional administrative tasks. These tasks are typically incumbent not on the individual participant, but merely on the program sponsor.

To allow for enhanced flexibility on the part of the program sponsor, the web site provides for a selection of elements that may be combined according to the requirements and objective of the envisaged program. To this end, the web site enables the sponsor to identify unambiguous rules, suitable rewards, efficient communication strategies, and measurable success metrics. By permitting each element of the program to be adapted to the target audience, the sponsor is put in a position to engage program participants and enhance the overall program effectiveness.

To unburden the program sponsor from the duty of defining the incentive program, an alternative business process may assign this task to the operator of the web server, database server, or entire cloud computing infrastructure. In this case, the sponsor would inform the operator of her specific requirements, typically in the course of direct negotiations. Here, by negotiation is meant any dialog between the sponsor and operator intended to produce an agreement upon the features of the incentive program.

As an alternative to designing the incentive program from scratch, the web site allows to adjust, extend, or combine existing programs to tailor them to the needs of the sponsor. Again, such adaptation may be performed by either the operator or respective sponsor. Similarly, an advanced embodiment may allow for the individual participant to customize a predefined incentive program, such as by electing a subset of elements to fit his or her preferences. Even then, the program may later be adapted to allow for requirement changes on the part of the sponsor or participant.

To allow the program sponsor to track performance and measure the overall success of the incentive program, the database client allows for an extensive evaluation of program status and progression. Such evaluation may pertain to selected or all elements of the program at hand. To this end, when triggered by the program sponsor, the database client, in an automated fashion, will collect any relevant data by means of the DBMS. The results, potentially consolidated according to the sponsor's preference, may be presented to the sponsor by means of the WUI or via e-mail communication. As an alternative to requesting an evaluation ad hoc, the sponsor may choose to receive an automated report in predetermined time intervals or on predetermined dates.

Finally, to support the participant in his or her commitment to the incentive program, the web server may be scripted to remind the participant of any progress due in the course of the program. Such reminder may depend on predefined conditions that the participant may elect and combine by means of the WUI. Once these conditions are specified, the web server will automatically deliver reminders until progress is eventually achieved. For transmission of the reminders, the web server employs a communication service at the participant's option, such as e-mail or Short Message Service (SMS). In mobile telecommunications, SMS is the text communication service component of phone, web, or mobile communication systems, using standardized communications protocols that allow notification of the participant on a fixed-line or mobile phone.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of encouraging a behavior of a participant, which method comprises reporting a progress towards a predetermined goal and storing the progress in a database.

2. Method as in claim 1 wherein the progress is reported by means of the Internet.

3. Method as in claim 2 wherein the progress is stored by a web server.

4. Method as in claim 3 wherein the progress is reported by means of a web browser or a special application.

5. Method as in claim 4 comprising the step of, prior to reporting the progress, authenticating the participant to the web server.

6. Method as in claim 5 wherein the step of authenticating the participant to the web server comprises entering a uniform resource identifier into the web browser.

7. Method as in claim 5 or 6 wherein the step of authenticating the participant to the web server comprises reading a machine-readable representation of data.

8. Method as in claim 5 or 6 wherein the progress is reported by means of a barcode, the method comprising the additional step of generating a further barcode upon storing the progress.

9. Method as in claim 8 wherein the barcode takes the form of a two-dimensional barcode.

10. Method as in claim 5 or 6 wherein the step of authenticating the participant to the web server comprises capturing a biometric characteristic of the participant.

11. Method as in claim 10 wherein the characteristic is related to a fingerprint of the participant.

12. Method as in claim 10 wherein the characteristic is related to an ocular trait of the participant.

13. Method as in any of the preceding claims further comprising the step of, prior to storing the progress, requesting confirmation from an approver.

14. Method as in any of the preceding claims wherein the database comprises a registry of participants, the method comprising the preliminary step of registering the participant in the registry of participants.

15. Method as in any of the preceding claims comprising the additional step of reminding the participant of the predetermined goal until the participant has attained the goal.
